(19) Europäisches Patentamt / European Patent Office / Office européen des brevets

(11) **EP 1 931 456 B1**

(12) **EUROPEAN PATENT SPECIFICATION**

(45) Date of publication and mention
of the grant of the patent:
**30.06.2010 Bulletin 2010/26**

(21) Application number: **06792354.0**

(22) Date of filing: **02.10.2006**

(51) Int Cl.:
**B01F 13/00** *(2006.01)*  **B01F 5/04** *(2006.01)*
**B01F 13/10** *(2006.01)*  **B01L 3/00** *(2006.01)*
**B01J 19/00** *(2006.01)*

(86) International application number:
**PCT/EP2006/009534**

(87) International publication number:
**WO 2007/039265 (12.04.2007 Gazette 2007/15)**

(54) **MICROFLUIDIC NETWORK AND METHOD**

MIKROFLUIDNETZ UND VERFAHREN

RESEAU ET PROCEDE MICROFLUIDIQUES

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **06.10.2005 EP 05292074**

(43) Date of publication of application:
**18.06.2008 Bulletin 2008/25**

(73) Proprietors:
• **Unilever PLC
London
EC4Y 0DY (GB)**
Designated Contracting States:
**CY GB IE**
• **Unilever N.V.
3013 AL Rotterdam (NL)**
Designated Contracting States:
**AT BE BG CH CZ DE DK EE ES FI FR GR HU IS IT
LI LT LU LV MC NL PL PT RO SE SI SK TR**

(72) Inventors:
• **BARBIER, Valessa
F-94000 Créteil (FR)**

• **JOUSSE, Fabien, Frederic, Raymond, Marie
Bedford Bedfordshire MK44 1LQ (GB)**
• **TABELING, Patrick, Jean, Rene
F-75231 Paris Cedex 05 (FR)**
• **WILLAIME, Hervé
F-75231 Paris Cedex 05 (FR)**

(74) Representative: **Hugot, Alain et al
Unilever Patent Group
Colworth House
Sharnbrook
Bedford, MK44 1LQ (GB)**

(56) References cited:
**EP-A- 1 362 634     WO-A-2005/058477**

• **BILLINGHAM J. ET AL.: "Flow phenomena and
stability of microfluidic networks" [Online] 12 May
2005 (2005-05-12), XP002371235 Retrieved from
the Internet: URL:http://www.smithinst.ac.uk/
Projects/ES GI49/ESGI49-UnileverMicrofluidics/
Report/M icrofluidics.pdf> [retrieved on
2006-03-08]**

## Description

The present invention relates to a microfluidic network and to a process for producing droplets through a plurality of linked microfluidic devices wherein the formation of the droplets is synchronised by naturally occuring hydrodynamic interactions between the devices.

## BACKGROUND AND PRIOR ART

Microfluidic devices are well known, for example as described in WO-A-2005/058477, which discloses a microfluidic network in accordance with the preamble of claim 1, and EP-A-1 362 634. The dynamics of droplet formation in such devices has been analysed, for example as described in Billingham J., et al, "Flow Phenomena and Stability of Microfluidic Networks", 12 May 2005, URL: http://www.smithinst.ac/uk (XP002371235) or in Lung-Hsin Hung et al, Proc. 8th Int. Conf. on Miniaturised System for Chemistry and Life Science, Sep. 26 - 30, Malmō, Sweden.

Micro-fluidic devices have been successfully employed to form emulsion droplets, bubbles, particles, encapsulates, and other complex micro-structures with good control over particle size and composition. By collecting the droplets formed in such devices, one can form novel micro-structured products. In view of the small scale of such devices, the formation of single droplets or similar structures in a micro-device is controlled by a balance of capillary force and viscous or inertial forces, which typically limits the throughput through a single micro-device to a few ml/hr. For practical application requiring production rates in the order of litres/hour, it is therefore necessary to increase the production throughput. This may be done by three means: (1) increasing flow velocity through a micro-device; (2) increasing the size of the micro-device; (3) increasing the number of micro-devices.

In practice, the flow velocity is limited by the break-up mechanism: above a certain flow velocity, depending on viscosity, size, and surface tension of the liquids contacted while remaining in the laminar flow regime, breakup no longer occurs and a stratified flow pattern is formed. Increasing the velocity eventually leads to a turbulent flow, which can break-up the liquid jet This other type of break-up, however, does not lead to a single drop size and therefore cannot be used to create products with a homogeneous drop size distribution.

The size of droplets is constrained by the size of the channels in the micro-device. Therefore increasing the size of a micro-device, results in an increased drop size. It is therefore not practical to increase the size of a device only to increase throughput

Parallelisation of multiple micro-devices can achieve the required throughput without any change in the distribution of drop size, and therefore is the preferred way of achieving higher throughput Several micro-reactors exploit parallelisation of a few 10's or 100's of micro-channels to increase throughput To limit the complexity of such arrays, a single fluid inlet for each fluid is distributed, via a manifold, to multiple micro-devices. In theory, a perfect manifold distributing the fluids into exactly similar micro-devices could lead to a single droplet size distribution. In practice however, the homogeneity of droplet size distribution coming from an array of parallel emitters is limited by the imbalance of flow rates through each micro-channel, which may arise from small difference in the channel dimension. These differences can be due, e.g., to imperfections in the fabrication of the micro-devices, or to deposits or fouling on the surface of the micro-devices.

Therefore it is an aim of the present invention to provide a method of generating droplets in a parallel microfluidic device which have a much narrower droplet size distribution than was previously possible.

The present inventors have observed that such parallel micro-devices are not independent, as they are linked by the single fluid sources. This can lead to "crosstalk" between the channels, wherein the formation of a drop in one channel creates a pressure imbalance affecting the formation of droplets in a neighbouring channel. It has been observed that such interdependence can be exploited to provide a much narrower droplet size distribution than was previously possible.

A first aspect of the present invention provides a microfluidic network in accordance with the features of claim 1.

A second aspect of the present invention provides a method in accordance with features of claim 7.

The present invention relates to a microfluidic network of droplet emitters which are auto-synchronised by hydrodynamic interactions.

A droplet emitter is defined herein as a confluence of at least two inlet streams where one fluid stream is immiscible in the other so as to form droplets. The inlet stream which is carrying the fluid which will become the droplet phase is sometimes referred to herein as a dispersed phase inlet stream. In the simplest form, such a junction is made up of two immiscible fluids brought together in a T-junction. Such a droplet emitter is defined herein as a 'single emitter' because all of the droplets produced originate from one dispersed phase inlet stream at the junction. The invention also includes networks of double emitters or triple emitters or emitters of even higher order. A good example of a double emitter is given in "Controlled droplet fusion in microfluidic devices", L.-H. Hung, W.-Y. Tseng, K. Choi, Y.-C. Tan, K. J. Shea, A. P. Lee, Proceedings of the 8th Conference on Miniaturized Systems for Chemistry and Life Sciences, September 26-30, 2004, Malmö, Sweden, p539-541, T. Laurell, J. Nilsson, K. Jensen, D. J. Harrison, J. P. Kutter, Editors (Royal Society of Chemistry: Cambridge). A double emitter produces droplets which originate from two dispersed phase inlet streams at the junction.

For the avoidance of doubt, an emitter is characterised based on the number of inlet streams entering the junction which will form droplets. It is quite possible for example that such a single dispersed phase inlet stream is itself formed by a confluence of a plurality of inlet streams, which may have merged together only a short distance before the emitter. The characterisation comes from the number of dispersed phase inlet streams actually entering the droplet emitter junction, irrespective of the upstream history of the inlets at the emitter.

## DETAILED DESCRIPTION OF THE INVENTION

In one described embodiment, each emitter has a first inlet port and and an outlet port arranged along a first axis of symmetry, the first inlet port and the outlet port being interconnected via first and second communicating channels which are substantially symmetrical about the first axis of symmetry.

Second and third inlet ports may be provided at respective positions along the first and second communicating channels. The second and third inlet ports may be provided along a second axis of symmetry substantially orthogonal to the first axis of symmetry.

The first and second communicating channels together may form a square or rectangular shape. However, together they could also form a circular or elliptical, or any other symmetrical shape.

The first, second and third inlet ports may be arranged as respective T junctions with the continuous structure formed by the first and second communicating channels.

When two streams come together to form a droplet of one fluid in another, the drop-forming microfluidic intersection acts as an oscillator with an intrinsic frequency determined by the intersection geometry, fluid viscosity, flow rates, surface tension, and device materials. Coupling between neighbouring emitters originates from the flow rate / pressure variation due to the presence of droplets in the channel network. Indeed the pressure required to push a liquid at a given flow rate in a micro-channel is higher, if the micro-channel contains a droplet of a second liquid, than without a drop. At the manifold point the various micro-channels are connected and fed through. Hence when a droplet forms the flow rate in this channel decreases, which affects the flow in the other channel. As the frequency of droplet formation depends on flow rate, this in turn affects the frequency of droplet formation in the other channel.

When parallelising many such intersections with a common fluid source, such cross-talk between channels leads to dynamic instabilities: each channel is not independent of the other, but is coupled to others via the effect of the drops on the flow. This can be through capillary effects or hydrodynamic effects. The current state of the art does not allow developing a full understanding of the behaviour of two free coupled oscillators.

However, there exists a general theoretical understanding of the behaviour of two coupled oscillators, one of which has a fixed forced frequency [P. Mannevile, Dissipative structures and weak turbulence, Perspective in physics, H. Araki, A. Libchaber, G. Parisi, editors, Academic Press: London, 1990, Chapter 6]. Such a theoretical coupled system presents three different classes of behaviour, depending on the coupling parameter and the difference in the intrinsic frequency of the oscillators:

1. Quasi-periodic for vanishingly low coupling: each intersection act as an independent oscillator, with substantially the same frequency (if the oscillators are strictly identical) but different phases
2. Chaotic for intermediate or strong coupling, where the regular behaviour of each oscillator is destroyed
3. Synchronised for intermediate or strong coupling, where all oscillators have the same frequency but may have different phases. This can also be the case even if the oscillators have slightly different intrinsic frequency, up to 50% different.

The homogeneity of drop size distribution in a collection of micro-devices depends strongly on the regime of interaction. The inventors have observed that in one example exhibiting a quasi-periodic regime corresponding to a collection of un-coupled oscillators, each emitter presented a drop size variation around the mean of the order of 16%. When the manifold geometry was adjusted, so that the micro-devices became synchronised, total variation of drop size around the global mean fell to 6%. In a chaotic regime, total drop size variation was up to 20%. Therefore it is the attainment of the synchronised state which gives rise to a surprising and highly significant narrowing of droplet size distribution.

The inventors have developed an understanding of the different regimes which enables the skilled person to easily achieve synchronisation through straightforward system tweaking.

Of course it is possible to force each microfluidic device to operate at the same frequency by using a vibrating valve for each device. However, in view of the problem of scale-up this would be a very expensive method of synchronisation for when many thousands of such devices are desired to operate in parallel.

For the avoidance of doubt, the present invention does not preclude the use of forced oscillation. Instead it provides a method of attaining an auto-synchronised state which can allow a vast array of microfluidic devices to operate in synchronisation with a vastly reduced number of forced frequency devices. When the system is operating in an auto-synchronised state, a minority of forced devices will spread their frequency throughout the array.

Thus the present invention relates to a microfluidic network of droplet emitters, each producing droplets of a first fluid into a second fluid immiscible in the first The streams carrying the formed droplets are referred to as outlet streams. The streams carrying the first and second fluids are referred to as inlet streams.

As discussed above, the microfluidic devices must be in fluid communication. It is preferred that the devices have a common fluid inlet stream, i.e. that they are fed from a manifold having a single fluid inlet

It is also preferred that a plurality of the outlet streams of a plurality of the devices merge together into a common outlet stream.

In an arrangement with common outlet streams the strength of the interaction has been found to be strongly sensitive to the numbers of droplets present in each outlet stream before merging together into the common outlet stream. Preferably therefore the arrangement is such that from 2 to 8 droplets are present in each outlet stream before merging together into the common outlet stream. Preferably the number of droplets is from 2 to 5. With this arrangement the formation of a droplet has a significant impact on the resistance of the outlet stream and therefore affects the flow pattern of the supply streams, the fluctuation of which drives the synchronisation with the other droplet emitters.

A plurality of emitters have a common supply stream and a common outlet stream. In this arrangement all channels have the same length and width. In this arrangement a length from the point where the inlet streams for each emitter become individual streams to the point where the droplets are formed is roughly equal to the length from the point where the droplets are formed to a point where the outlet streams merge. This so-called 'square' arrangement is thought to be particularly receptive to attainment of synchronisation. Thus the average length of the streams from the common fluid supply point to the droplet formation point to the average length of the streams from the droplet formation point to the common outlet stream are in a ratio of from 3:1 to 1:3. Preferably the ratio is from 2:1 to 1:2, preferably from 1.5:1 to 1:1.5. Preferably also, the fluid resistance of the channels is also in the same ratio.

The inventors have discovered that the coupling strength between the emitters is the main controlling parameter. It indicates how much one oscillator is coupled to a neighbouring oscillator. For low coupling strength, the oscillators are independent and the behaviour is always quasi-periodic. For intermediate coupling strength, the oscillators are coupled with large regions of chaotic behaviour and some synchronised states. For large coupling strength, the oscillators are coupled with mostly synchronised states.

In the particular example described below, the coupling strength can be approximated by the following formula:

$$g = \frac{a\delta RQ}{\omega_0 4(R_{s0} + R_o)} \frac{\partial \omega}{\partial Q_o}$$

Where g is the coupling strength, Q the total flow rate in the system, Qo the oil flow rate, $R_{50}$ is the resistance of the micro-fluidic element located downstream of the oil manifold and upstream of the junction with the water stream, $R_O$ is the resistance of the outlet branch, $\delta R$ the additional resistance due to the presence of a droplet in a micro-channel, a is a coefficient dependent on viscosity ratio, $\omega_0$ the intrinsic frequency of droplet formation in the given conditions of flow rate, and $d\omega/dQ_O$ the variation of the intrinsic oscillator frequency with flow rate of oil. Therefore the coupling strength increases by acting on the following parameters:

- Increasing the additional resistance due to 1 droplet in the network
- Decreasing the resistance of the inlet or outlet branches
- Choosing conditions, for which the variation of frequency with flow rate is maximum

The invention is further illustrated by reference to the following description of preferred embodiments and examples and with reference to the accompanying drawings, in which:

Figure 1 (a) Sketch of a model parallelized system, along with a typical flow pattern (in which water droplets appear in white, and oil in black); (b) the equivalent electrical circuit of the microfluidic system;

Figure 2 (a)-(c) show the frequency distribution of emitted droplets in a model system where the lengths of the inlet and outlet streams are varied;

Figures 2 (d)-(f) show the droplet size distribution in the common outlet stream for the above arrangements;

Figure 3 (a)-(c) show the frequency distribution of emitted droplets in a model system where the lengths of the inlet and outlet streams are equal and the water flow rates are varied; and

Figures 3 (d)-(f) show the droplet size distribution in the common outlet stream for the above arrangements.

## Example 1

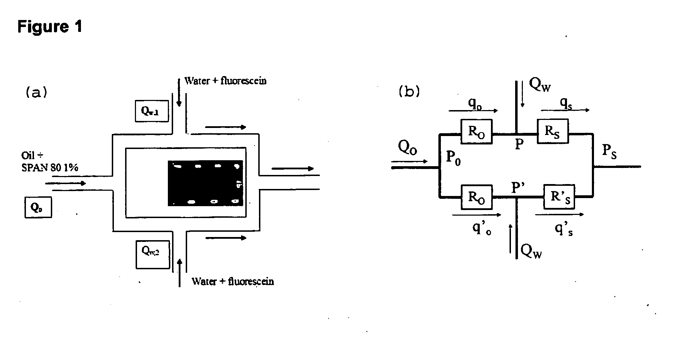

The experimental system we are considering here is shown in Fig 1.

Water and oil feed two T junctions placed in parallel on the same chip. Droplets are produced at the two junctions. They further move downstream, and are eventually collected in a single canal.

As shown in Figure 1, a single droplet emitter comprises an oil stream inlet and an outlet arranged along an axis of symmetry, interconnected by a pair of interconnecting channels which together form a rectangular shape. Part-way along each side of the rectangle which is parallel with the axis of symmetry is provided a respective water stream inlet. These two inlets are arranged along another axis of symmetry orthogonal to the axis of symmetry connecting the oil inlet and the outlet. The inlets each are arranged as a T-junction with their respective sides of the rectangular shape formed by the connecting channels.

Flows are driven by syringe pumps. There is one single entry for oil, and two separate entries for water, connected to two independant syringe pumps. The channels are moulded in PDMS (PolyDimethylSiloxane), using soft lithography technology. They are covered by a glass plate, coated with a PDMS film, so as to expose the fluids to surfaces with homogeneous hydrophobicity. The microchannels have rectangular cross-sections, 50 $\mu$m high and 200 $\mu$m wide; their lengths are in the centimeter range. The fluids are tetradecane and water labeled with fluorescein and the corresponding flow-rates range between 0 and 20 $\mu$l/min for oil and 0 and 10 $\mu$l/min for water. The system is observed by using standard epifluorescence microscopy. The emission frequency, drop sizes, water and oil flow rates in each branch are inferred from real time measurements of the light intensity at different places in the channels, at a few hundreds of micrometers beyond the T-junctions. Various treatments of the light intensity signal are applied (FFT, statistical distributions, etc), leading to a detailed characterization of the dynamics of the system.

Each T junction was characterised separately by isolation from the rest of the sytem. For each emitter, the physical mechanism of the drop formation process is initiated by a water tongue penetrating into the oil channel, forming a neck which elongates under the effect of the oil shear stress, and eventually breaks up; the breakup event quenches the emission of an isolated droplet; this process is periodic in time, as shown by the Fourier analysis of the light intensity signal. Typically, the emission frequencies monotically increase with the water flow-rate and the oil flow-rate, forming a set of curves we call "dispersion curves".

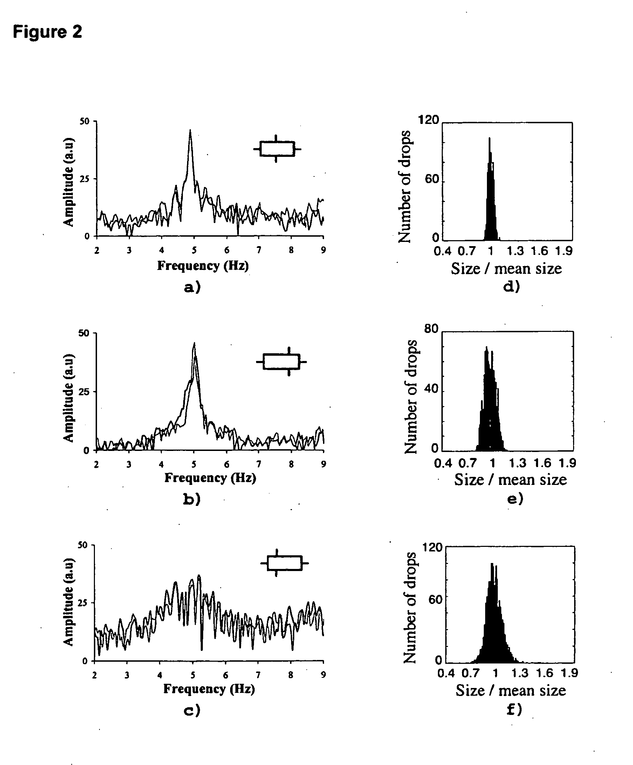

We now consider three parallelized systems as precedently represented in Fig 1 a. The first parallel system has "outlet" channels as long as the the "inlet" channels, so that $R_{S0}=R'_{S0}=R_O$. The second has "inlet" channels 5 times as long as the "outlet" channels, so that $R_{S0}=R'_{S0}=(1/5)*R_O$. The third has "outlet" channels 5 times as long as the "inlet" channels, so that $R_{S0}=R'_{S0}=5*R_O$. Note that the local geometry of all devices at the position of the junction between the channels carrying the continuous and dispersed phase is in all case the same, so that all three devices produce nominally the same droplet size for a given combination of flow rates. Figure 2 presents the spectral frequency distribution observed for the particular choice of flow rate: Qo=4$\mu$L/min, Qw=Qw'=0.5$\mu$l/min. The first system (figure 2a), where $R_{S0}=R_O$, shows a single narrow peak for both oscillators, signaling the synchronisation of the two drop emitters. The second system (figure 2b) presents similar peaks for both oscillators, slightly separated independent, indicating that the two oscillators are not coupled but nominally present the same frequency. The third (figure 2c) shows a broad band for both oscillators, signaling that it has settled into a chaotic regime. Figure 2 also presents the size distribution of the droplets formed by the two oscillators in those three cases. When the system is synchronised (figure 2d) the width of the distribution is approximately 6%. When the system is quasi-periodic (figure 2e), the half-width of the distribution reaches 14%. When the system is chaotic (figure 2f), the width of the distribution increases to approximately 20%.

**Example 2**

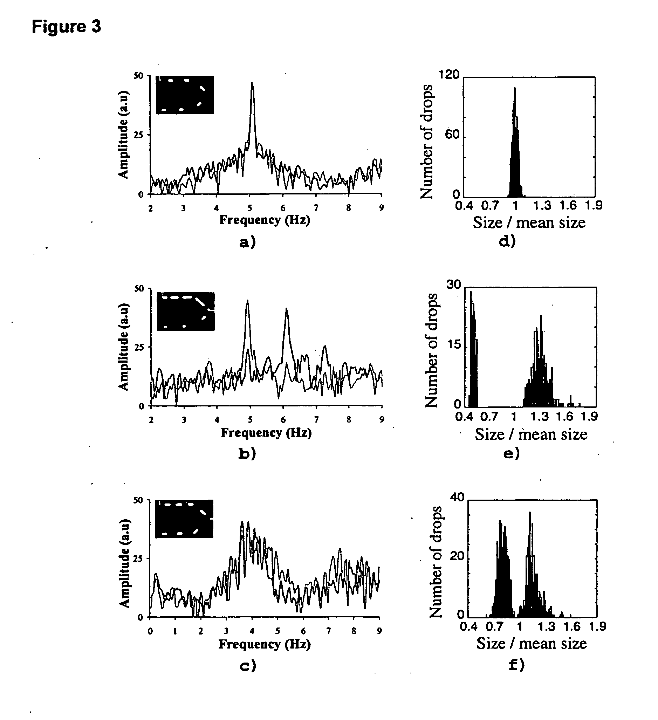

In the second example, we consider the "square" channel system as depicted in figure 1a, with $R_{S0}=R'_{S0}=R_O$ which gave a synchronized state in example 1. This system has previously been used to develop figure 2a and figure 2d. However this time a dissymmetry between the branches is introduced, by changing the flow rate of water input into the upper and lower branches. Figure 3 shows the effect of the dissymmetry on the system. For small differences reaching up to 20% difference between water and oil flow rates (figure 3a), the system remains synchronised and the droplet size distribution is stable, reaching only 6% of the average droplet size as seen on figure 3d. When increasing the dissymmetry, the system falls out of synchrony and becomes quasi-periodic, as indicated in figure 3b. In this state, the droplet size distribution for each independent oscillator is approximately 14%. However, because of the dissymmetry in flow rate, the mean size between the different emitters is also not the same, resulting in a total drop size variation in the order of 40%, as seen on figure 3e. The system can also become chaotic, as indicated in figure 3c. Here again, the size dispersions of the droplets is broad, reaching levels on the order of 30-60%. This shows that in a synchronized state, a small variation of the flow rates does not change significantly the droplet size distribution produced by the coupled emitters.

Therefore careful selection of geometry and flow rates can lead to synchronised states which leads to narrow size distributions.

**Claims**

1.  A microfluidic network comprising a plurality of droplet emitters forming droplets of a first fluid in a second fluid immiscible in the first fluid to produce an outlet stream of droplets, wherein each of the emitters are in fluid communication with each other via the network and have an auto-synchronised droplet formation frequency by hydrodynamic interaction between the emitters, wherein a plurality of the emitters share a common fluid inlet stream, wherein the outlet streams of a plurality of the emitters merge together into a common outlet stream,

**characterized in that** all channels have the same length and width, and **in that** the length from the point where the inlet streams for each emitter become individual streams to the point where the droplets are formed is roughly equal to the length from the point where the droplets are formed to a point where the outlet streams merge.

2. A microfluidic network according to claim 1, wherein each emitter has a first inlet port and an outlet port arranged along a first axis of symmetry, the first inlet port and the outlet port being interconnected via first and second communication channels which are substantially symmetrical about the first axis of symmetry.

3. A microfluidic network according to claim 2, wherein second and third inlet ports are provided at respective positions along the first and second communicating channels.

4. A microfluidic network according to claim 3, wherein the second and third inlet ports are provided along a second axis of symmetry substantially orthogonal to the first axis of symmetry.

5. A microfluidic network according to any one of claims 2 to 4, wherein the first and second communicating channels together form a square or rectangular shape.

6. A microfluidic network according to any one of claims 3-4 or to claim 5 when dependent on claims 3-4, wherein the first, second and third inlet ports are arranged as T junctions with a continuous channel structure formed by the first and second communicating channels.

7. A method of producing emulsion droplets from a microfluidic network, the method comprising the steps of:

   (a) providing a microfluidic network according to any one of the preceding claims; and
   (b) operating the microfluidic network such that from 2 to 8 droplets are present in each outlet stream before merging together into the common outlet stream.

8. A method according to claim 7, wherein the number of droplets is from 2 to 5.

9. A method according to claim 7 or claim 8, wherein at least one emitter has an externally forced droplet frequency.

**Patentansprüche**

1. Mikrofluidnetz, das mehrere Tröpfchenausstoßeinrichtungen umfasst, die Tröpfchen eines ersten Fluids in einem zweiten Fluid, das mit dem ersten Fluid nicht vermischbar ist, bilden, um einen Auslassstrom von Tröpfchen zu erzeugen, wobei alle Ausstoßeinrichtungen über das Netz fluidtechnisch miteinander kommunizieren und jeweils eine selbstsynchronisierte Tröpfchenbildungsfrequenz durch hydrodynamische Wechselwirkung zwischen den Ausstoßeinrichtungen besitzen, wobei mehrere der Ausstoßeinrichtungen einen gemeinsamen Fluideinlassstrom gemeinsam nutzen, wobei sich die Auslassströme mehrerer der Ausstoßeinrichtungen zu einem gemeinsamen Auslassstrom mischen,
   **dadurch gekennzeichnet, dass**
   alle Kanäle die gleiche Länge und die gleiche Breite besitzen, und
   dass die Länge von dem Punkt, an dem die Einlassströme für jede Ausstoßeinrichtung zu einzelnen Strömen werden, zu dem Punkt, an dem die Tröpfchen gebildet werden, ungefähr gleich der Länge von dem Punkt, an dem die Tröpfchen gebildet werden, zu einem Punkt, an dem sich die Auslassströme mischen, ist.

2. Mikrofluidnetz nach Anspruch 1, wobei jede Ausstoßeinrichtung einen ersten Einlassanschluss und einen längs einer ersten Symmetrieachse angeordneten Auslassanschluss besitzt, wobei der erste Einlassanschluss und der Auslassanschluss über einen ersten und einen zweiten Kommunikationskanal, die um die erste Symmetrieachse im Wesentlichen symmetrisch sind, miteinander verbunden sind.

3. Mikrofluidnetz nach Anspruch 2, wobei ein zweiter und ein dritter Einlassanschluss an jeweiligen Positionen längs des ersten und des zweiten Kommunikationskanals vorgesehen sind.

4. Mikrofluidnetz nach Anspruch 3, wobei der zweite und der dritte Einlassanschluss längs einer zweiten Symmetrieachse, die zu der ersten Symmetrieachse im Wesentlichen senkrecht ist, vorgesehen sind.

5. Mikrofluidnetz nach einem der Ansprüche 2 bis 4, wobei der erste und der zweite Kommunikationskanal zusammen eine quadratische oder rechtwinklige Form bilden.

6. Mikrofluidnetz nach einem der Ansprüche 3-4 oder nach Anspruch 5, wenn abhängig von den Ansprüchen 3-4, wobei der erste, der zweite und der dritte Einlassanschluss als T-Verbinder mit einer ununterbrochenen Kanalstruktur, die durch den ersten und den zweiten Kommunikationskanal gebildet ist, angeordnet sind.

**7.** Verfahren zum Erzeugen von Emulsionströpfchen von einem Mikrofluidnetz, wobei das Verfahren die folgenden Schritte umfasst:

(a) Vorsehen eines Mikrofluidnetzes nach einem der vorhergehenden Ansprüche; und
(b) Betreiben des Mikrofluidnetzes in der Weise, dass in jedem Auslassstrom 2 bis 8 Tröpfchen vorhanden sind, bevor sie zu dem gemeinsamen Auslassstrom vermischt werden.

**8.** Verfahren nach Anspruch 7, wobei die Anzahl der Tröpfchen im Bereich von 2 bis 5 liegt.

**9.** Verfahren nach Anspruch 7 oder Anspruch 8, wobei wenigstens eine Ausstoßeinrichtung eine von außen erzwungene Tröpfchenfrequenz besitzt.

**Revendications**

**1.** Réseau microfluidique comprenant une pluralité d'émetteurs de goutte formant des gouttes d'un premier fluide dans un second fluide non miscible dans le premier fluide pour produire un courant de sortie de gouttes, dans lequel chacun des émetteurs sont en communication de fluide entre eux via le réseau et ont une fréquence de formation de goutte auto-synchronisée par l'interaction hydrodynamique entre les émetteurs, dans lequel une pluralité d'émetteurs partagent un courant d'entrée de fluide commun, dans lequel les courants de sortie d'une pluralité des émetteurs fusionnent en un courant de sortie commun,
**caractérisé en ce que** tous les canaux ont la même longueur et la même largeur, et **en ce que** la longueur par rapport au point où les courants d'entrée pour chaque émetteur deviennent des courants individuels jusqu'au point où les gouttes sont formées, est approximativement égale à la longueur à partir du point où les gouttes sont formées jusqu'à un point où les courants de sortie fusionnent.

**2.** Réseau microfluidique selon la revendication 1, dans lequel chaque émetteur a un premier orifice d'entrée et un orifice de sortie agencés le long d'un premier axe de symétrie, le premier orifice d'entrée et l'orifice de sortie étant raccordés via des premier et second canaux de communication qui sont sensiblement symétriques autour du premier axe de symétrie.

**3.** Réseau microfluidique selon la revendication 2, dans lequel les deuxième et troisième orifices d'entrée sont prévus dans des positions respectives le long des premier et second canaux de communication.

**4.** Réseau microfluidique selon la revendication 3, dans lequel les deuxième et troisième orifices d'entrée sont prévus le long d'un second axe de symétrie sensiblement orthogonal au premier axe de symétrie.

**5.** Réseau microfluidique selon l'une quelconque des revendications 2 à 4, dans lequel les premier et second canaux de communication forment ensemble une forme carrée ou rectangulaire.

**6.** Réseau microfluidique selon l'une quelconque des revendications 3 à 4 ou la revendication 5 lorsqu'elle dépend des revendications 3 à 4, dans lequel les premier, deuxième et troisième orifices d'entrée sont agencés comme des jonctions en T avec une structure de canal continue formée par les premier et second canaux de communication.

**7.** Procédé pour produire des gouttes d'émulsion à partir d'un réseau microfluidique, le procédé comprenant les étapes consistant à :

(a) prévoir un réseau microfluidique selon l'une quelconque des revendications précédentes ; et
(b) actionner le réseau microfluidique de sorte que l'on trouve de 2 à 8 gouttes dans chaque courant de sortie avant de fusionner dans un courant de sortie commun.

**8.** Procédé selon la revendication 7, dans lequel le nombre de gouttes est de l'ordre de 2 à 5.

**9.** Procédé selon la revendication 7 ou la revendication 8, dans lequel au moins un émetteur a une fréquence de goutte forcée extérieurement.

**Figure 1**

(a)

Water + fluorescein

$Q_{w,1}$

Oil ÷
SPAN 80 1%

$Q_o$

$Q_{w,2}$

Water + fluorescein

(b)

$Q_W$

$q_o$     $q_s$

$R_O$   P   $R_S$

$Q_O$

$P_0$     $P_S$

$R_O$   P'   $R'_S$

$q'_o$     $q'_s$

$Q_W$

Figure 2

**Figure 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005058477 A

- EP 1362634 A

**Non-patent literature cited in the description**

- **Billingham J. et al.** *Flow Phenomena and Stability of Microfluidic Networks,* 12 May 2005
- **Lung-Hsin Hung et al.** *Proc. 8th Int. Conf. on Miniaturised System for Chemistry and Life Science*

- Controlled droplet fusion in microfluidic devices. **L.-H. Hung ; W.-Y. Tseng ; K. Choi ; Y.-C. Tan ; K. J. Shea ; A. P. Lee.** Proceedings of the 8th Conference on Miniaturized Systems for Chemistry and Life Sciences. Royal Society of Chemistry, 26 September 2004, 539-541
- **P. Mannevile.** Dissipative structures and weak turbulence, Perspective in physics. Academic Press, 1990